# FASCICULE DE BREVET EUROPEEN

(11) **EP 0 730 172 B1**
(45) Date de publication et mention de la délivrance du brevet: **03.09.2003**
(21) Numéro de dépôt: 96400394.1
(22) Date de dépôt: 26.02.1996
(51) Int. Cl.: G02B 6/293, H04J 14/02

(54) **Multiplexeur optique à insertion-extraction utilisant des circulateurs optiques et des réseaux de bragg photoinscrits**
Ein optische Zirkulatoren und durch Lichteinstrahlung eingeschriebene Bragg-Gitter verwendender optischer Multiplexer zur Einfügung und Ausblendung von Wellenlängen
Add-drop optical multiplexer comprising optical circulators and photoinscripted Bragg-gratings

(30) Priorité: 28.02.1995 FR 9502303
(43) Date de publication de la demande: 04.09.1996
(73) Titulaire: FRANCE TELECOM, 75015 Paris (FR)
(72) Inventeur: Chawki, Mouhammad Jamil, 22300 Lannion (FR); Delevaque, Eric, 22300 Ploumilliau (FR); Tholey, Valérie, 22300 Lannion (FR)
(74) Mandataire: Texier, Christian

(56) Documents cités:
- US-A- 5 283 686
- MICROWAVE AND OPTICAL TECHNOLOGY LETTERS, vol. 7, no. 11, 5 Août 1994, pages 499-500, XP002004957 J.CAPMANY ET.AL.: "A novel highly selective and tunable optical bandpass filter using a fiber grating and a fiber Fabry-Perot"
- EUROPEAN CONFERENCE ON OPTICAL COMMUNICATION (ECOC 93), vol. 3, 12 Septembre 1993, MONTREUX,SWITZERLAND, pages 29-32, XP002004958 F.BILODEAU ET.AL.: "Compact all-fiber narrowband transmission filter using Bragg gratings"

## Description

### DOMAINE TECHNIQUE

La présente invention concerne un multiplexeur optique à insertion-extraction (" *optical add-drop multiplexer* ").

Elle s'applique notamment au domaine des télécommunications optiques.

### ETAT DE LA TECHNIQUE ANTERIEURE

On connaît diverses architectures de réseaux de télécommunications utilisant des guides optiques et des multiplexeurs optiques à insertion-extraction à base de filtres acousto-optiques ou de filtres de Fabry-Pérot.

Ces multiplexeurs à insertion-extraction connus présentent l'inconvénient de conduire à de fortes pertes optiques tant à l'insertion qu'à l'extraction.

Le document MICROWAVE AND OPTICAL TECHNOLOGY LETTERS, vol. 7, n° 11, Août 1994, pages 499-501, divulgue un multiplexeur optique destiné à extraire d'un ensemble de signaux optiques dont les longueurs d'onde appartiennent à un ensemble de longueurs d'onde au moins un signal optique ayant une longueur d'onde déterminée, choisie dans ledit ensemble de longueurs d'onde. Ce multiplexeur comprend un circulateur optique comprenant une entrée destinée à recevoir l'ensemble de signaux et une sortie, et un moyen de sélection optique qui est couplé d'un côté au circulateur et qui comprend au moins un réseau de Bragg photoinscrit, ce réseau de Bragg photoinscrit étant associé à la longueur d'onde déterminée et apte à se trouver dans un état où il réfléchit le signal ayant cette longueur d'onde déterminée et où il transmet les signaux ayant une longueur d'onde différente de cette dernière, le moyen de sélection coopérant avec le circulateur optique en vue de l'extraction dudit signal optique.

### EXPOSE DE L'INVENTION

La présente invention a pour but de remédier à cet inconvénient en proposant un multiplexeur à insertion-extraction qui conduit à des pertes optiques moins élevées que celles de ces multiplexeurs connus.

Dans certains modes de réalisation particuliers, l'invention permet même d'amplifier les signaux optíques qui sont insérés et ceux qui sont extraits et/ou de disposer d'un multiplexeur programmable.

Le multiplexeur conforme à la présente invention est défini dans les revendications indépendantes annexées, lesquelles sont délimitées sous forme d'un préambule et d'une partie caractérisante par rapport au document Microware and Optical Technology Letters, vol 7, N°11 Aout 1994. Les revendications dépendantes définissent des caractéristiques optionnelles de l'invention.

### BREVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- les figures 1 à 4 sont des vues schématiques de modes de réalisation particuliers du multiplexeur optique à insertion-extraction objet de l'invention, utilisant deux circulateurs optiques à trois ports, et
- la figure 5 est une vue schématique d'un autre mode de réalisation particulier de ce multiplexeur, utilisant un circulateur optique à quatre ports.

### EXPOSE DETAILLE DE MODES DE REALISATION PARTICULIERS

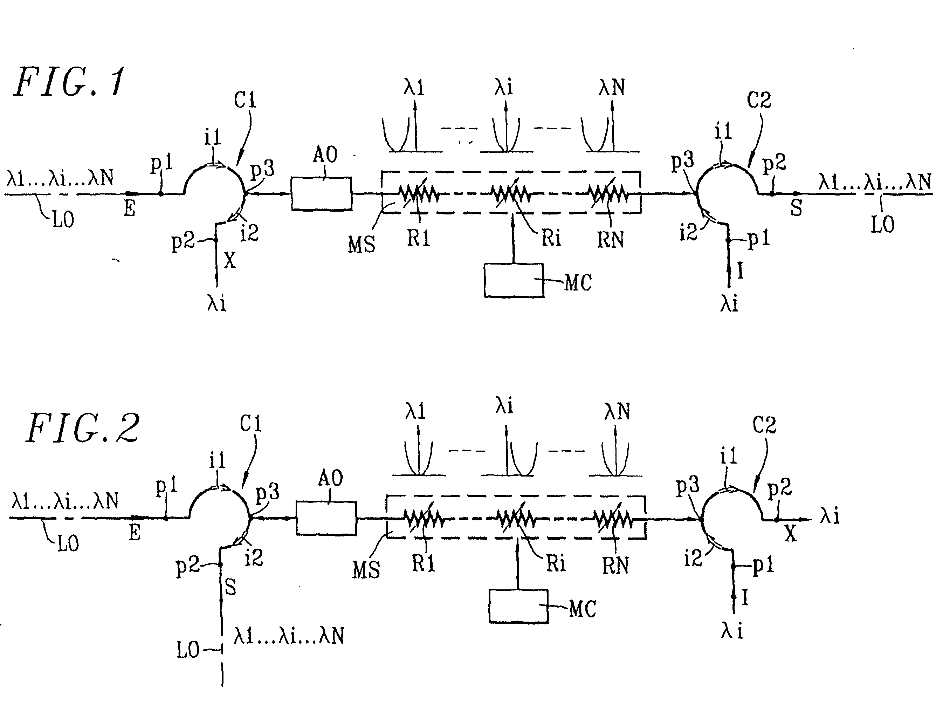

Le multiplexeur optique à insertion-extraction conforme à l'invention, qui est schématiquement représenté sur la figure 1, est destiné à insérer dans un ensemble de signaux optiques et à extraire de cet ensemble de signaux des signaux optiques ayant des longueurs d'onde déterminées.

Les longueurs d'onde des signaux optiques considérés appartiennent à un ensemble de longueurs d'onde λ1 ... λi ... λN, où N est un nombre entier supérieur à 1.

On cherche par exemple à insérer et/ou extraire un signal dont la longueur d'onde est choisie dans l'ensemble de longueurs d'onde λ1 ... λN et vaut par exemple λi, où 1≤i≤N.

Le multiplexeur représenté sur la figure 1 est inséré dans une ligne optique LO formant par exemple une boucle optique dans laquelle on trouve d'autres multiplexeurs optiques non représentés, identiques à celui de la figure 1 et situés en amont et en aval de celui-ci sur la ligne optique LO.

Cette ligne est parcourue par les signaux de longueurs d'onde λ1 ... λi ... λN.

Le multiplexeur optique conforme à l'invention, qui est représenté sur la figure 1, comprend :
- un premier circulateur optique C1 à trois ports comprenant un port d'entrée p1, qui est destiné à recevoir l'ensemble de signaux, un port intermédiaire p3, et un port de sortie p2,
- un deuxième circulateur optique C2 à trois ports comprenant un port d'entrée p1, qui est destiné à recevoir le signal à insérer dans l'ensemble de signaux, un port intermédiaire p3, et un port de sortie p2,
- un moyen de sélection optique MS qui est optiquement couplé, d'un côté, au port intermédiaire p3 du premier circulateur C1 et, de l'autre côté, au port intermédiaire p3 du deuxième circulateur C2 et qui comprend une pluralité de réseaux de Bragg photoinscrits R1 ... Ri .... RN qui sont montés en série et qui sont respectivement associés aux longueurs d'onde λ1 ... λi ... λN, et
- un moyen MC de commande électrique de ce moyen de sélection MS.

Chacun des réseaux R1 ... Ri ... RN est apte à se trouver :
- soit dans un premier état, état naturel dans lequel il est "calé", c'est-à-dire réglé, sur la longueur d'onde correspondante,
- soit dans un deuxième état dans lequel il n'est pas réglé sur cette longueur d'onde.

Dans le premier état, ce réseau réfléchit les signaux optiques incidents ayant la longueur d'onde sur laquelle il est réglé et transmet les signaux optiques n'ayant pas cette longueur d'onde.

Dans le deuxième état, ce réseau transmet les signaux optiques incidents quelle que soit la longueur d'onde de ceux-ci.

Un tel réseau, qui -on le rappelle- est inscrit sur un guide optique, par exemple une fibre optique ou un guide planaire (par exemple en silicium, en InP ou en niobate de lithium), fonctionne en transmission en tant que filtre réjecteur et en réflexion en tant que filtre passe-bande.

Les réseaux R1 ... RN du multiplexeur de la figure 1 sont programmables.

En effet, chacun d'entre eux peut être réglé ou non sur la longueur d'onde qui lui correspond.

On connaît des réseaux de Bragg photoinscrits dont le taux de réjection atteint 99% (20 dB).

Le moyen de commande MC est apte à placer sélectivement chacun des réseaux R1 ... RN dans le deuxième état correspondant.

Pour ce faire, ce moyen de commande MC comprend des moyens d'application d'une contrainte mécanique (dispositifs piézoélectriques) ou d'un échauffement thermique (dispositifs à effet Peltier) à chacun des réseaux R1 ... RN.

L'application d'une telle contrainte mécanique ou d'un tel échauffement thermique sur un réseau de Bragg photoinscrit permet d'obtenir une accordabilité de quelques nanomètres par commande électrique.

Chaque réseau peut ainsi être réglé (le dispositif piézoélectrique ou à effet Peltier correspondant est inactivé) ou non réglé (ce dispositif est activé) sur la longueur d'onde qui lui est associée.

On considère maintenant les circulateurs optiques C1 et C2.

On rappelle qu'un circulateur optique est un système de couplage optique, qui est généralement fait à partir de fibres optiques, qui est indépendant de la polarisation et qui a une faible perte d'insertion, cette dernière étant de l'ordre de 1 dB.

Ce système de couplage optique utilise la technique de l'isolation optique.

Dans l'exemple représenté sur la figure 1, chacun des circulateurs optiques C1 et C2 a trois ports optiques, à savoir les ports p1 et p2 déjà cités et un autre port p3.

Le port p1 du circulateur C1 est raccordé à la ligne LO située en amont du multiplexeur et correspond à l'entree E du multiplexeur.

Le port p2 de ce circulateur C1 correspond à la sortie d'extraction X du multiplexeur.

Le port p1 du circulateur C2 correspond à l'entrée d'insertion I de ce multiplexeur.

Le port p2 de ce circulateur C2 est raccordé à la ligne LO située en aval du multiplexeur et correspond à la sortie S du multiplexeur.

Chacun des circulateurs C1 et C2 comprend un premier isolateur optique i1 et un deuxième isolateur optique i2.

L'entrée de l'isolateur i1 et la sortie de l'isolateur i2 sont respectivement couplées au port p1 et au port p2, comme on le voit sur la figure 1.

La sortie de l'isolateur i1 et l'entrée de l'isolateur i2 sont optiquement couplées au port p3.

Ce port p3 est lui même optiquement couplé au moyen de sélection optique MS et, plus précisément, au réseau de Bragg photoinscrit R1 en ce qui concerne le port p3 de C1, comme on le voit sur la figure 1.

Dans l'exemple représenté sur cette figure 1, ce couplage entre le port p3 et le réseau R1 se fait par l'intermédiaire d'un milieu amplificateur optique bidirectionnel AO qui est par exemple un milieu amplificateur à fibre optique ou un milieu amplificateur à semiconducteur.

Un signal optique entrant dans le circulateur C1 par le port p3 de celui-ci est totalement transmis au port p2 de ce circulateur C1.

Les ports p1 et p2 sont entièrement isolés l'un de l'autre, l'isolation étant supérieure à 30 dB.

Le port p3 du circulateur C2 est optiquement couplé au réseau de Bragg photoinscrit RN.

Les N réseaux R1 ... RN programmables déterminent la (ou les) longueur(s) d'onde à extraire sur le port p2 du circulateur C1 suivant les positions fréquentielles de ces réseaux.

Dans l'exemple représenté, un signal de longueur d'onde λi est extrait des signaux parvenant à l'entrée E du multiplexeur optique et un signal de longueur d'onde λi est également inséré dans ces signaux.

Pour ce faire, le réseau Ri est réglé sur cette longueur d'onde λi.

Les autres réseaux R1 ... Ri-1, Ri+1 ... RN ne sont, au contraire, pas réglés sur les longueurs d'onde qui leur correspondent.

Ainsi, tous les signaux d'entrée dont les longueurs d'onde sont différentes de λi passent de l'entrée E à la sortie S du multiplexeur optique.

Un signal de longueur d'onde λi, qui pénètre dans ce multiplexeur, est réfléchi par le réseau photoinscrit Ri pour retourner vers ce circulateur C1 et quitter celui-ci par la sortie d'extraction X où il peut être traité par des moyens appropriés non représentés.

Un signal de longueur d'onde λi provenant d'une source non représentée et pénètrant dans le multiplexeur par l'entrée d'insertion I de celui-ci parvient au réseau Ri, est réfléchi par celui-ci et sort du multiplexeur par la sortie S de celui-ci.

Le milieu amplificateur bidirectionnel AO permet :
- la simple amplification des signaux optiques qui traversent le multiplexeur de la figure 1 et
- la double amplification d'un signal qui est extrait de ces signaux, un signal inséré n'étant pas amplifié.

Dans un mode de réalisation non représenté, le milieu amplificateur optique AO est placé non pas entre le circulateur C1 et le réseau R1 mais entre le réseau RN et le circulateur C2.

Dans ce cas, ce milieu amplificateur permet :
- la simple amplification des signaux qui traversent le multiplexeur et
- la double amplification d'un signal inséré, un signal extrait n'étant pas amplifié.

Il est à noter que les circulateurs C1 et C2 assurent l'isolation du milieu amplificateur AO vis-à-vis des réflexions optiques.

Ainsi, il n'est pas nécessaire d'ajouter des isolateurs optiques au multiplexeur de la figure 1 pour obtenir cette isolation.

Pour augmenter l'amplification optique des signaux, on peut utiliser non pas un mais deux milieux amplificateurs optiques, l'un étant placé entre le circulateur C1 et le réseau R1 et l'autre entre le réseau RN et le circulateur C2.

Pour des raisons de stabilité, il est préférable que le ou les milieux amplificateurs optiques aient un gain stabilisé.

Dans un mode de réalisation non représenté, une pluralité des réseaux R1 ... RN sont réglés sur les longueurs d'onde correspondantes tandis que ce n'est pas le cas des autres réseaux.

On règle par exemple les réseaux R1 et RN sur les longueurs d'ondes correspondantes λ1 et λN et les autres réseaux R2 ... RN-1 ne sont pas réglés sur les longueurs d'onde λ2 ... λN-1.

Dans ces conditions, on est capable d'insérer dans les signaux qui arrivent à l'entrée du multiplexeur des signaux de longueurs d'onde respectives λ1 et λN et l'on est également capable d'en extraire de tels signaux de longueurs d'onde respectives λ1 et λN.

Dans un autre mode de réalisation non représenté, le multiplexeur ne comprend qu'un seul réseau de Bragg photoinscrit qui est réglé sur la longueur d'onde correspondante (et qui est donc dans son état normal, sans avoir besoin de moyen de commande).

Dans ce cas, on est capable d'insérer dans des signaux incidents et/ou d'extraire de ces signaux incidents un signal ayant cette longueur d'onde.

On considère maintenant le multiplexeur conforme à l'invention qui est schématiquement représenté sur la figure 2.

L'entrée E et la sortie S de ce multiplexeur se trouvent sur un même circulateur optique, à savoir le circulateur C1.

On voit encore sur la figure 2 les deux parties de la ligne optique LO auxquelles sont respectivement reliées l'entrée E et la sortie S du multiplexeur.

La fonction d'insertion-extraction est quant à elle réalisée à l'aide d'un deuxième circulateur, à savoir le circulateur C2.

Plus précisément, le multiplexeur de la figure 2 est constitué de la même façon que celui de la figure 1 à ceci près que le réglage des réseaux de Bragg photoinscrits est différent.

Dans l'exemple choisi, où l'on veut insérer un signal de longueur d'onde λi dans les signaux incidents et/ou extraire de ceux-ci un signal ayant également la longueur d'onde λi, tous les réseaux faisant partie des moyens de sélection MS du multiplexeur de la figure 2 sont réglés sur les longueurs d'onde correspondantes à l'exception du réseau photoinscrit Ri correspondant à la longueur d'onde λi qui n'est pas réglé sur cette longueur d'onde λi.

Dans ces conditions, le port d'entrée p1 et le port de sortie p2 du circulateur C1 du multiplexeur de la figure 2 correspondent respectivement à l'entrée E et à la sortie S du multiplexeur de la figure 2.

Le port d'entrée p1 et le port de sortie p2 du circulateur C2 de ce multiplexeur de la figure 2 correspondent respectivement à l'entrée d'insertion I et à la sortie d'extraction X du multiplexeur de la figure 2.

Les signaux optiques, dont les longueurs d'onde appartiennent à l'ensemble λ1 ... λN mais diffèrent de λi, arrivent à l'entrée E du multiplexeur puis passent dans le circulateur C1 pour arriver au moyen de sélection MS où ils sont réfléchis par les réseaux photoinscrits correspondants.

Ces signaux parviennent alors à la sortie S du multiplexeur en repassant par le circulateur C1.

Un signal optique de longueur d'onde λi injecté à l'entrée I traverse tous les réseaux R1 ... RN pour parvenir également à la sortie S.

Un signal optique de longueur d'onde λi parvenant par l'entrée E du multiplexeur de la figure 2 traverse l'ensemble des réseaux de celui-ci, passe dans le circulateur C2 puis parvient à la sortie d'extraction X.

Au lieu qu'un seul réseau ne soit pas réglé sur la longueur d'onde correspondante, on pourrait ne pas régler une pluralité de réseaux sur les longueurs d'onde correspondantes pour pouvoir insérer et/ou extraire des signaux optiques ayant ces longueurs d'onde.

Dans l'exemple représenté sur la figure 2, le milieu amplificateur optique bidirectionnel AO est encore inséré entre le port p3 du circulateur C1 et le réseau R1.

Dans ces conditions, les signaux qui ne correspondent pas à une longueur d'onde d'extraction et qui parviennent à l'entrée E se retrouvent à la sortie S après avoir été doublement amplifiés par ce milieu amplificateur AO.

De plus, tout signal à insérer subit une simple amplification de la part de ce milieu amplificateur AO et il en est de même pour tout signal à extraire.

On pourrait bien entendu placer un autre milieu amplificateur optique bidirectionnel entre le réseau RN et le circulateur C2 du multiplexeur de la figure 2.

On pourrait également utiliser un seul milieu amplificateur optique que l'on placerait entre ce réseau RN et ce circulateur C2.

Dans ce cas, seuls seraient amplifiés les signaux à extraire et les signaux à insérer.

On peut réaliser un multiplexeur conforme à l'invention, qui est comparable à celui de la figure 1 mais qui comprend un ou une pluralité de réseaux de Bragg photoinscrits qui restent "fixes" (c'est-à-dire dans leur premier état (état naturel) et qui ne nécessite donc aucun moyen de commande. Avec ce multiplexeur on est capable d'insérer et/ou d'extraire la ou les longueurs d'onde correspondant à ce ou ces réseaux.

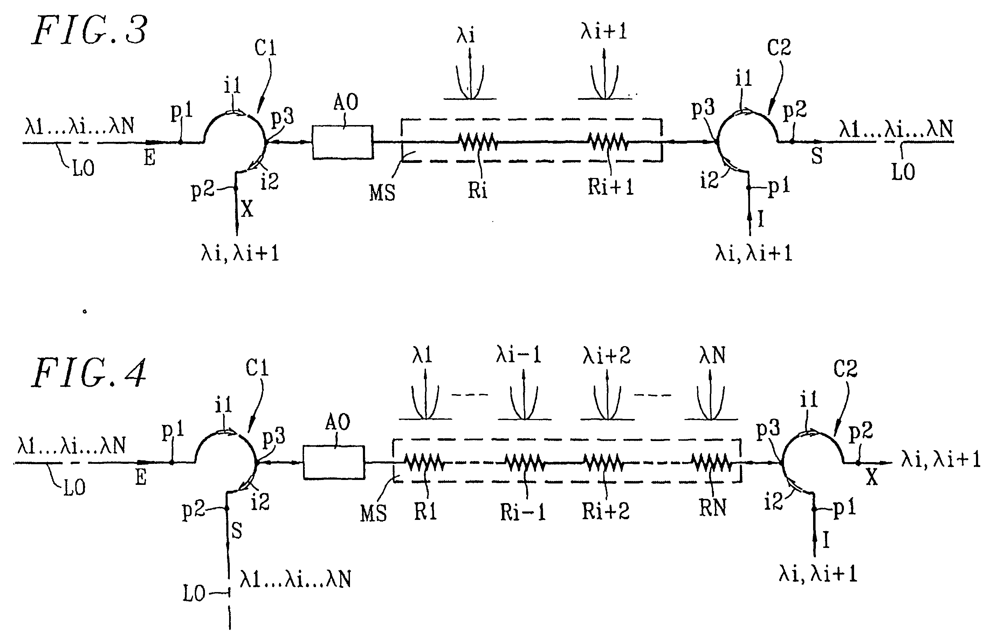

Ceci est schématiquement illustré par la figure 3 représentant un multiplexeur conforme à l'invention identique à celui de la figure 1, excepté pour le moyen de sélection qui, dans le cas de la figure 3, ne comprend que les réseaux Ri et Ri+1 qui sont montés en série et restent constamment dans leur premier état (il n'y a pas de moyen de commande MC). Ce multiplexeur de la figure 3 permet d'insérer et/ou d'extraire des signaux de longueurs d'onde λi et λi+1.

On peut aussi réaliser un multiplexeur conforme à l'invention, qui est comparable à celui de la figure 2 mais qui comprend un ou une pluralité de réseaux de Bragg photoinscrits qui restent "fixes" (c'est-à-dire dans leur premier état (état naturel) et qui ne nécessite donc aucun moyen de commande. Avec ce multiplexeur on est capable d'insérer et/ou d'extraire les longueurs d'onde restantes non réfléchies par le ou les réseaux.

Ceci est schématiquement illustré par la figure 4 représentant un multiplexeur conforme à l'invention identique à celui de la figure 2, excepté pour le moyen de sélection qui, dans le cas de la figure 4, ne comprend que les réseaux R1, ..., Ri-1, Ri+2, ..., RN qui sont montés en série et restent constamment dans leur premier état (il n'y a pas de moyen de commande MC). Ce multiplexeur de la figure 4 permet d'insérer et/ou d'extraire des signaux de longueurs d'onde λi et λi+1.

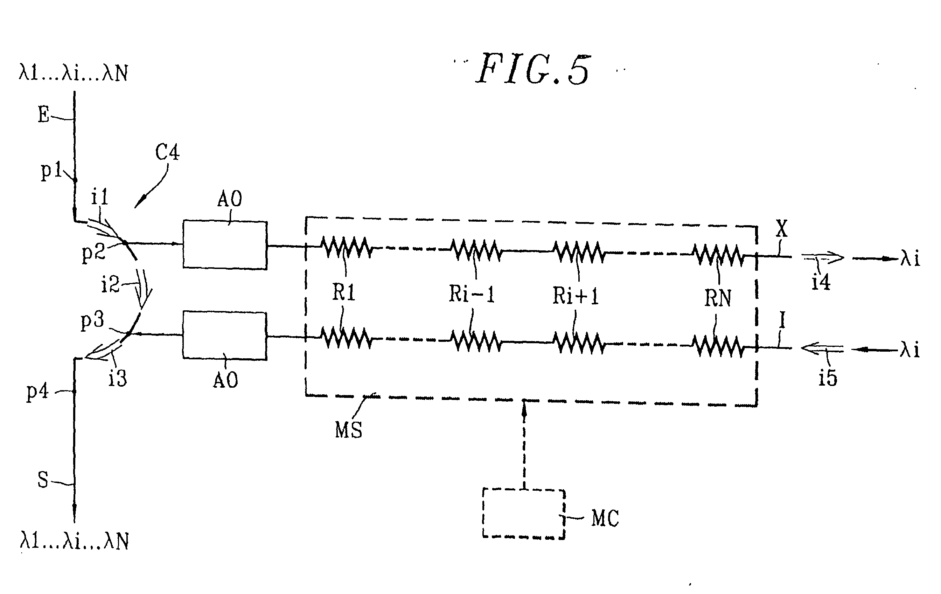

La figure 5 illustre schématiquement un autre mode de réalisation particulier du multiplexeur objet de l'invention, comprenant un circulateur optique C4 à quatre ports successifs p1, p2, p3 et p4 qui sont séparés les uns des autres par trois isolateurs optiques i1, i2, i3.

Le multiplexeur de la figure 5 comprend aussi un moyen de sélection MS composé d'un premier ensemble et d'un deuxième ensemble de réseaux de Bragg photoinscrits. Ces ensembles sont identiques et chacun d'eux comprend les N-1 réseaux R1, ..., Ri-1, Ri+1, ..., RN mentionnés plus haut, montés en série et restant dans leur premier état.

Le réseau R1 du premier ensemble est relié au port 2 du circulateur C4, de préférence par l'intermédiaire d'un milieu amplificateur optique AO. L'extrémité libre du réseau RN de ce premier ensemble constitue la sortie d'extraction X du multiplexeur.

Le réseau R1 du deuxième ensemble est relié au port p3 du circulateur C4, de préférence par l'intermédiaire d'un milieu amplificateur optique AO. L'extrémité libre du réseau RN de ce deuxième ensemble constitue l'entrée d'insertion du multiplexeur.

Le port p1 du circulateur correspond à l'entrée E du multiplexeur et reçoit des signaux de longueurs d'onde respectives λ1, ..., λi, ..., λN. Le signal de longueur d'onde λi est extrait en X. En I on peut insérer un signal de longueur d'onde λi. Le port p4 du circulateur correspond à la sortie S du multiplexeur et fournit les signaux non extraits,de longueurs d'onde λ1, ..., λi-1, λi+1, ..., λN, et le signal inséré, de longueur d'onde λi.

Dans le cas où les milieux amplificateurs AO sont utilisés, l'isolation optique de ces milieux amplificateurs est obtenue, d'un côté, par les isolateurs du circulateur C4 et, de l'autre côté, par des isolateurs optiques i4 et i5 que l'on place respectivement à la sortie d'extraction X et à l'entrée d'insertion I, comme on le voit sur la figure 5.

Plus généralement, le premier ensemble peut comprendre un ou une pluralité de réseaux fixes et le deuxième ensemble peut comprendre ce ou ces réseaux fixes. On peut alors extraire et/ou insérer les longueurs d'onde non réfléchies par ce ou ces réseaux.

Bien entendu, dans un multiplexeur du genre de celui de la figure 5, on pourrait associer aux réseaux un moyen de commande du genre du moyen MC mentionné plus haut pour mettre sélectivement ces réseaux dans leur deuxième état.

Dans l'invention, l'utilisation d'un ou deux milieux amplificateurs optiques permet d'obtenir un multiplexeur optique à insertion-extraction "avec gain" c'est-à-dire où la fonction d'amplification est intégrée, d'où un équipement moins coûteux qu'un multiplexeur optique à insertion-extraction auquel on ajouterait un ou des amplificateurs optiques.

## Revendications

1. Multiplexeur optique fonctionnant au moins en extraction, de façon à pouvoir extraire d'un ensemble de N signaux optiques dont les longueurs d'onde respectives appartiennent à un ensemble de N longueurs d'onde (λ₁...λᵢ....λ_{N}) au moins un signal optique ayant une longueur d'onde prédéterminée (λᵢ), choisie dans cet ensemble de N longueurs d'onde, ce multiplexeur comprenant:
- au moins un circulateur optique (C1) à trois ports (p1, p3, p2), adapté pour que les signaux entrant par l'un quelconque de ses ports sortent par le port suivant immédiatement, le premier port (p1) constituant une entrée destinée à recevoir ledit ensemble de N signaux, et le troisième port (p2) constituant une sortie, et
- des moyens de réflexion selective en longueur d'onde (MS) qui sont couplés, d'un côté, au deuxième port (p3) du circulateur et qui comprennent au moins un réseau de Bragg photoinscrit (Ri; Ri,Ri+1; R1...Ri-1,Ri+2....R_{N}; R1...Ri....R_{N}), lesdits moyens de réflexion selective en longueur d'onde étant aptes à réfléchir l'un de deux groupes de signaux comprenant, le premier le signal ayant ladite longueur d'onde prédéterminée (λᵢ) et le second: les signaux ayant une longueur d'onde différente de cette demière, et à transmettre les signaux de l'autre groupe, lesdits moyens de réflexion selective en longueur d'onde (MS) coopérant avec le circulateur optique précité (C1) en vue de l'extraction dudit signal optique ayant ladite longueur d'onde déterminée (λᵢ),
**caractérisé en ce que** ledit multiplexeur est adapté pour fonctionner également en insertion, de façon à pouvoir également insérer au moins un signal optique de longueur d'onde prédéterminée (λᵢ) dans ledit ensemble de signaux optiques duquel on a extrait ledit signal de longueur d'onde prédéterminée (λᵢ),
le multiplexeur comprenant en outre à cet effet un second circulateur optique (C2) à trois ports (p1, p3, p2), également adapté pour que les signaux entrant par l'un quelconque de ses ports sortent par le port suivant immédiatement, ledit second circulateur optique étant couplé par son deuxiéme port (p3) à l'autre côté desdits moyens de réflexion selective en longueur d'onde (MS), le premier port (p1) constituant une entrée destinée à recevoir ledit signal ayant ladite longueur d'onde prédéterminée (λᵢ) à insérer dans l'ensemble de signaux, et le troisième port (p2) constituant une sortie,
lesdits moyens de réflexion sélective en longueur d'onde (MS) étant adaptés pour coopérer avec les deux circulateurs (C1, C2) de façon que les sorties (p2) de ces deux circulateurs fournissent respectivement l'une: ledit signal (λᵢ) extrait de cet ensemble de signaux, et l'autre: ledit ensemble de signaux duquel on a extrait et dans lequel on a inséré ledit signal de longueur d'onde prédéterminée (λᵢ).

2. Multiplexeur selon la revendication 1, **caractérisé en ce que** lesdits moyens de réflexion sélective en longueur d'onde (MS) sont adaptés pour réfléchir ladite longueur d'onde prédéterminée (λᵢ) dudit au moins un signal à extraire et dudit au moins un signal à insérer et pour transmettre les autres signaux ayant une longueur d'onde différente, la sortie (p2) du premier circulateur (C1) étant alors apte à foumir ledit signal de longueur d'onde prédéterminée (λᵢ) extrait dudit ensemble de signaux, et la sortie (p2) du second circulateur (C2) l'ensemble de signaux duquel on a extrait et dans lequel on a inséré ledit signal de longueur d'onde prédéterminée (λᵢ).

3. Multiplexeur optique selon la revendication 2, **caractérisé en ce que** ledit au moins un réseau de Bragg photoinscrit (Ri; Ri,Ri+1)constitutif desdits moyens de réflexion sélective en longueur d'onde (MS) se trouve dans un état dit naturel où il réfléchit ladite longueur d'onde prédéterminée (λᵢ).

4. Multiplexeur optique selon la revendication 3, adapté pour extraire et pour insérer un signal optique unique de longueur d'onde prédéterminée (λᵢ), **caractérisé en ce que** lesdits moyens de réflexion sélective en longueur d'onde (MS) comprennent un réseau de Bragg photoinscrit (Ri) unique se trouvant dans ledit état dit naturel où il réfléchit ladite longueur d'onde prédéterminée (λᵢ).

5. Multiplexeur optique selon la revendication 3, adapté pour extraire et pour insérer une pluralité p de signaux optiques ayant des longueurs d'onde respectives prédéterminées (λ_{i,}λᵢᵢ₊₁), **caractérisé en ce que** lesdits moyens de réflexion sélective en longueur d'onde (MS) comprennent un nombre correspondant p de réseaux de Bragg photoinscrits (Ri, Ri+1)montés en série et se trouvant tous dans ledit état dit naturel où ils réfléchissent chacun l'une desdites longueurs d'onde prédéterminées (λ_{i,}λᵢᵢ₊₁).

6. Multiplexeur optique selon la revendication 2, **caractérisé en ce que**:
- lesdits moyens de réflexion sélective en longueur d'onde (MS) comprennent un nombre N de réseaux de Bragg photoinscrits (R1...Ri...R_{N}) montés en série et respectivement associés aux différentes longueurs d'onde dudit ensemble de N longueurs d'onde, chacun desdits réseaux étant apte à se trouver soit dans un premier état dit naturel où ils réfléchit la longueur d'onde respective à laquelle il est associé soit dans un second état où il transmet cette longueur d'onde respective, et
- lesdit moyens de réflexion sélective MS) comprennent en outre un moyen de commande (MC) destiné à amener sélectivement chacun desdits réseaux dans ledit second état.

7. Multiplexeur optique selon la revendication 6, adapté pour extraire et pour insérer un signal optique unique ayant une longueur d'onde prédéterminée (λᵢ), **caractérisé en ce que** celui desdits N réseaux de Bragg qui est associé à ladite longueur d'onde prédéterminée (λᵢ) est maintenu dans son premier état tandis que chacun des (N-1) autres réseaux est placé dans son second état.

8. Multiplexeur optique selon la revendication 6, adapté pour extraire et pour insérer une pluralité p de signaux optiques ayant des longueurs d'onde respectives prédéterminées (λ_{i,} λᵢᵢ₊₁), **caractérisé en ce que** ceux (p) desdits N réseaux de Bragg qui sont associés auxdites longueurs d'onde prédéterminées (λ_{i,} λᵢᵢ₊₁) sont maintenus dans leur premier état tandis que chacun des (N-p) autres réseaux est placé dans son second état.

9. Multiplexeur selon la revendication 1, **caractérisé en ce que** lesdits moyens de réflexion sélective en longueur d'onde (MS) sont adaptés pour réfléchir les longueurs d'onde autres que ladite longueur d'onde prédéterminée (λᵢ) dudit au moins un signal à extraire et dudit au moins un signal à insérer et pour transmettre ladite longueur d'onde prédéterminée (λᵢ) à extraire et à insérer, la sortie (p2) du premier circulateur (C1) étant alors apte à fournir l'ensemble de signaux duquel on a extrait et dans lequel on a inséré ledid signal de longueur d'onde prédéterminée (λᵢ), et la sortie (p2) du second circulateur (C2) ledit signal de longueur d'onde prédéterminée (λᵢ) extrait dudit ensemble de signaux.

10. Multiplexeur optique selon la revendication 9, **caractérisé en ce que** lesdits moyens de réflexion sélective en longueur d'onde (MS) comprennent une pluralité de réseaux de Bragg photoinscrits (R1...Ri-1, Ri+2....R_{N}) respectivement associés aux différentes longueurs d'onde de l'ensemble de longueurs d'onde autres que ladite au moins une longueur d'onde prédéterminée (λᵢ) et se trouvant tous dans un état dit naturel où ils réfléchissent l'une respective desdites longueurs d'onde autres.

11. Multiplexeur optique selon la revendication 10, adapté pour extraire et pour insérer un signal optique unique ayant une longueur d'onde prédéterminée (λᵢ), **caractérisé en ce que** lesdits moyens de réflexion sélective en longueur d'onde (MS) comprennent un nombre de réseaux de Bragg photoinscrits égal à N-1.

12. Multiplexeur optique selon la revendication 10, adapté pour extraire et pour insérer une pluralité p de signaux optiques ayant des longueurs d'onde prédéterminées (λ_{i,}λᵢᵢ₊₁), **caractérisé en ce que** lesdits moyens de réflexion sélective en longueur d'onde (MS) comprennent un nombre de réseaux de Bragg photoinscrits égal à N-p.

13. Multiplexeur optique selon la revendication 9, **caractérisé en ce que**:
- lesdits moyens de réflexion sélective en longueur d'onde (MS) comprennent un nombre N de réseaux de Bragg photoinscrits (R1...Ri....R_{N}) montés en série et respectivement associés aux différentes longueurs d'onde dudit ensemble de N longueurs d'onde, chacun desdits réseaux étant apte à se trouver soit dans un premier état dit naturel où il réfléchit la longueur d'onde respective à laquelle il est associé soit dans un second état où il transmet cette longueur d'onde respective, et
- lesdits moyens de réflexion sélective (MS) comprennent en outre un moyen de commande (MC) destiné à amener sélectivement chacun desdits réseaux dans ledit second état.

14. Multiplexeur optique selon la revendication 13, adapté pour extraire et pour insérer un signal optique unique ayant une longueur d'onde prédéterminée (λᵢ), **caractérisé en ce que** celui desdits N réseaux de Bragg qui est associé à ladite longueur d'onde prédéterminée (λᵢ) est placé dans son second état tandis que chacun des N-1 autres réseaux est maintenu dans son premier état.

15. Multiplexeur optique selon la revendication 13, adapté pour extraire et pour insérer une pluralité p de signaux optiques ayant des longueurs d'onde prédéterminées (λ_{i,}λᵢ₊₁), **caractérisé en ce que** ceux (p) desdits N réseaux de Bragg qui sont associés auxdites longueurs d'onde prédéterminées (λ_{i,}λᵢᵢ₊₁) sont placés dans leur second état tandis que chacun des N-p autres réseaux est maintenu dans son premier état.

16. Multiplexeur selon l'une quelconque des revendications 1 à 15, **caractérisé en ce qu'**il comprend en outre au moins un milieu amplificateur optique (AO), ce milieu amplificateur optique étant placé entre le moyen de sélection optique (MS) et l'un des premier et second circulateurs (C1, C2).

17. Multiplexeur selon l'une des revendications 1 à 15, **caractérisé en ce qu'**il comprend en outre au moins un milieu amplificateur optique (AO), ce milieu amplificateur optique étant placé entre le moyen de sélection optique (MS) et le premier circulateur (C1).

18. Multiplexeur selon l'une des revendications 1 à 17, **caractérisé en ce qu'**il comprend deux milieux amplificateurs optiques respectivement placés entre le moyen de sélection optique (MS) et les premier et second circulateurs (C1, C2).

19. Multiplexeur selon l'une quelconque des revendications 1 à 18, **caractérisé en ce que** chacun des premier et second circulateurs optiques (C1, C2) comprend un premier isolateur optique et un deuxième isolateur optique l'entrée du premier isolateur et la sortie du deuxième isolateur étant respectivement couplées à l'entrée (p1) et à la sortie (p2) du circulateur correspondant tandis que la sortie du premier isolateur et l'entrée du deuxième isolateur sont couplées au moyen de sélection optique (MS).

20. Multiplexeur optique fonctionnant au moins en extraction, de façon à pouvoir extraire d'un ensemble de N signaux optiques dont les longueurs d'onde respectives appartiennent à un ensemble de N longueurs d'onde (λ₁...λᵢ ....λ_{N}) au moins un signal optique ayant une longueur d'onde prédéterminée (λᵢ), choisie dans cet ensemble de N longueurs d'onde, ce multiplexeur comprenant:
- un circulateur optique (C4) comprenant au moins trois ports (p1, p2, p3, p4), adapté pour que les signaux entrant par l'un quelconque de ses ports sortent par le port suivant immédiatement, le premier port (p1) constituant une entrée destinée à recevoir ledit ensemble de N signaux, et le demier port (p4) constituant une sortie, et
- des moyens de réflexion sélective en longueur d'onde (MS) qui sont couplés, d'un côté, à au moins un port intermédiaire (p3) du circulateur et qui comprennent au moins un réseau de Bragg photoinscrit (R1...Ri-1, Ri+1...R_{N}), lesdits moyens de réflexion selective en longueur d'onde étant aptes à réfléchir l'un de deux groupes de signaux comprenant, le premier le signal ayant ladite longueur d'onde prédéterminée (λᵢ) et le second: les signaux ayant une longueur d'onde différente de cette dernière, et à transmettre les signaux de l'autre groupe,
lesdits moyens de réflexion sélective en longueur d'onde (MS) coopérant avec le circulateur optique précité (C4) en vue de l'extraction dudit signal optique ayant ladite longueur d'onde déterminée (λᵢ),
**caractérisé en ce que** ledit multiplexeur est adapté pour fonctionner également en insertion, de façon à pouvoir également insérer au moins un signal optique de longueur d'onde prédéterminée (λᵢ) dans ledit ensemble de signaux optiques duquel on a extrait ledit signal de longueur d'onde prédéterminée (λᵢ),
et **en ce que**, à cet effet:
- le circulateur optique (C4) est un circulateur à quatre ports, et
- les moyens de réflexion sélective en longueur d'onde (MS) sont couplés aux deux ports intermédiaires (p2, p3) du circulateur et comprennent, respectivement, un premier ensemble de M réseaux de Bragg photoinscrits (R1...Ri-1, Ri+1...R_{N}) montés en série et adaptés pour réfléchir chacun une longueur d'onde respective différente de ladite longueur d'onde prédéterminée (λᵢ), ledit premier ensemble étant couplé par une extrémité au deuxième port (p2) du circulateur de sorte que son autre extrémité constitue une sortie apte à foumir ledit signal extrait de longueur d'onde déterminée (λᵢ), et un second ensemble de M réseaux de Bragg photoinscrits (R1...Ri-1, Ri+1...R_{N}) identique au premier ensemble et couplé par une extrémité au troisième port (p3) du circulateur, l'autre extrémité dudit second ensemble constituant une entrée par laquelle est destiné à ête injecté le signal à insérer de longueur d'onde déterminée (λᵢ), la sortie (p4) du circulateur étant alors apte à foumir ledit ensemble de signaux duquel on a extrait et dans lequel on a inséré le signal de longueur d'onde prédéterminée (λᵢ).

21. Multiplexeur optique selon la revendications 20, **caractérisé en ce que** chacun des réseaux de Bragg dudit moyen de sélection (MS) est adapté pour se trouver dans un état dit naturel où il réfléchit une longueur d'onde respective différente de ladite longueur d'onde prédéterminée à extraire et à insérer.

22. Multiplexeur optique selon la revendication 20, **caractérisé en ce que** chacun des réseaux de Bragg dudit moyen de sélection (MS) est adapté pour se trouver soit dans un premier état dit naturel où il réfléchit une longueur d'onde respective différente de ladite longueur d'onde prédéterminée à extraire et à insérer soit dans un second état où il transmet ladite longueur d'onde respective, et **en ce que** le multiplexeur comprend en outre un moyen de commande destiné à mettre sélectivement chacun desdits réseaux dans ledit second état.

23. Multiplexeur optique selon selon l'une quelconque des revendications 20 à 22, adapté pour extraire et pour insérer un signal optique unique de longueur d'onde prédéterminée (λᵢ), **caractérisé en ce que** M= N-1.

24. Multiplexeur optique selon l'une quelconque des revendications 20 à 22, adapté pour extraire et pour insérer une pluralité p de signaux optiques ayant des longueurs d'onde respectives prédéterminées (λ_{i.}λᵢᵢ₊₁), **caractérisé en ce que** M = N-p.

25. Multiplexeur selon l'une quelconque des revendications 20 à 24 **caractérisé en ce qu'**il comprend en outre au moins un milieu amplificateur optique (AO) monté en série avec l'un au moins des premier et second ensembles.

26. Multiplexeur selon la revendication 25, **caractérisé en ce que** chacun des premier et second ensembles est monté en série avec au moins un milieu amplificateur optique (AO).

## Patentansprüche

1. Optischer Multiplexer, der zumindest extrahierend wirkt, derart, daß er aus einer Gruppe von N optischen Signalen, deren entsprechende Wellenlängen zu einer Gruppe von N Wellenlängen (λ1...λi...λN) gehören, mindestens ein optisches Signal mit einer vorbestimmten Wellenlänge (λi) extrahieren kann, welche aus dieser Gruppe von N Wellenlängen gewählt ist, wobei der Multiplexer umfaßt:
- mindestens einen optischen Zirkulator (C1) mit drei Öffnungen (p1, p3, p2), die derart ausgelegt sind, daß die bei einer beliebigen dieser Öffnungen eintretenden Signale bei der unmittelbar folgenden Öffnung austreten, wobei die erste Öffnung (p1) einen Eingang bildet, der dazu bestimmt ist, die Gruppe von N Signalen aufzunehmen und die dritte Öffnung (p2) einen Ausgang bildet, sowie
- wellenlängenselektive Reflektionsmittel (MS), die mit einer Seite an die zweite Öffnung (p3) des Zirkulators gekoppelt sind, und mindestens ein optisch eingeschriebenes Bragg-Gitter (Ri; Ri,Ri+1; R1...Ri-1,Ri+2...RN; R1...Ri...RN) umfassen, wobei die wellenlängenselektiven Reflektionsmittel ausgelegt sind, um entweder die Signalgruppe umfassend das Signal mit der vorbestimmten Wellenlänge (λi), oder die Signalgruppe umfassend die Signale mit einer von letzterer verschiedenen Wellenlänge zu reflektieren und die Signale der anderen Gruppe zu transmittieren, wobei die wellenlängenselektiven Reflektionsmittel (MS) mit dem obengenannten optischen Zirkulator (C1) zusammenwirken, um das optische Signal mit der bestimmten Wellenlänge (λi) zu extrahieren,
**dadurch gekennzeichnet, daß** der Multiplexer auch ausgelegt ist einfügend zu wirken, derart, daß er auch mindestens ein optisches Signal mit vorbestimmter Wellenlänge (λi) in die Gruppe von optischen Signalen einfügen kann, aus der man das Signal mit vorbestimmter Wellenlänge (λi) extrahiert hat, wobei der Multiplexer für diesen Zweck außerdem einen zweiten optischen Zirkulator (C2) mit drei Öffnungen (p1, p3, p2) umfaßt, die gleichermaßen so ausgelegt sind, daß die bei einer beliebigen dieser Öffnungen eingehenden Signale bei der unmittelbar folgenden Öffnung austreten, wobei der zweite optische Zirkulator mit seiner zweiten Öffnung (p3) an die andere Seite der wellenlängenselektiven Reflektionsmittel (MS) gekoppelt ist, die erste Öffnung (p1) einen Eingang bildet, der dazu bestimmt ist, das Signal mit der vorbestimmten Wellenlänge (λi) aufzunehmen, um es in die Signalgruppe einzufügen, und die dritte Öffnung (p2) einen Ausgang bildet, und
die wellenlängenselektiven Reflektionsmittel (MS) ausgelegt sind, um mit den zwei Zirkulatoren (C1, C2) derart zusammenzuwirken, daß einer der Ausgänge (p2) der beiden Zirkulatoren das aus der Signalgruppe extrahierte Signal (λi) liefert, und der andere die Signalgruppe, aus der man das Signal mit vorbestimmter Wellenlänge (λi) extrahiert und in das man dieses eingefügt hat.

2. Multiplexer nach Anspruch 1, **dadurch gekennzeichnet, daß** die wellenlängenselektiven Reflektionsmittel (MS) ausgelegt sind, um die vorbestimmte Wellenlänge (λi) des mindestens einen zu extrahierenden Signals und des wenigstens einen einzufügenden Signals zu reflektieren, und um die anderen Signale mit verschiedener Wellenlänge zu transmittieren, wobei der Ausgang (p2) des ersten Zirkulators (C1) ausgelegt ist, das aus der Signalgruppe extrahierte Signal vorbestimmter Wellenlänge (λi) zu liefern, und der Ausgang (p2) des zweiten Zirkulators (C2) ausgelegt ist, die Signalgruppe zu liefern, aus der man das Signal vorbestimmter Wellenlänge (λi) extrahiert und in die man es eingefügt hat.

3. Optischer Multiplexer nach Anspruch 2, **dadurch gekennzeichnet, daß** das mindestens eine optisch eingeschriebene Bragg-Gitter (Ri; Ri,Ri+1), das für die wellenlängenselektiven Reflektionsmittel (MS) wesentlich ist, sich in einem festgelegten Normalzustand befindet, in dem es die vorbestimmte Wellenlänge (λi) reflektiert.

4. Optischer Multiplexer nach Anspruch 3, ausgelegt um ein einzelnes optisches Signal mit vorbestimmter Wellenlänge (λi) zu extrahieren und einzufügen, **dadurch gekennzeichnet, daß** die wellenlängenselektiven Reflektionsmittel (MS) ein einzelnes optisch eingeschriebenes Bragg-Gitter (Ri) umfassen, das sich in dem festgelegten Normalzustand befindet, in dem es die vorbestimmte Wellenlänge (λi) reflektiert.

5. Optischer Multiplexer nach Anspruch 3, ausgelegt um eine Mehrzahl p optischer Signale mit jeweils vorbestimmten Wellenlängen (λi,λi+1) zu extrahieren und einzufügen, **dadurch gekennzeichnet, daß** die wellenlängenselektiven Reflektionsmittel (MS) eine entsprechende Anzahl p in Reihe geschalteter, optisch eingeschriebener Bragg-Gitter (Ri,Ri+1) umfassen, die sich in dem festgelegten Normalzustand befinden, in dem sie jeweils eine der vorbestimmten Wellenlängen (λi, λi+1) reflektieren.

6. Optischer Multiplexer nach Anspruch 2, **dadurch gekennzeichnet, daß**:
- die wellenlängenselektiven Reflektionsmittel (MS) eine Anzahl N in Reihe geschalteter, optisch eingeschriebener Bragg-Gitter (R1...Ri...RN) umfassen, die entsprechend verschiedenen Wellenlängen der Gruppe der N Wellenlängen zugeordnet sind, wobei jedes Gitter ausgelegt ist, sich entweder in einem ersten festgelegten Normalzustand zu befinden, in dem es seine ihm zugeordnete entsprechende Wellenlänge reflektiert, oder in einem zweiten Zustand, in dem es diese entsprechende Wellenlänge transmittiert, und
- die wellenlängenselektiven Reflektionsmittel (MS) außerdem Steuerungsmittel (MS) umfassen, die dazu bestimmt sind, jedes der Gitter selektiv in den zweiten Zustand zu bringen.

7. Optischer Multiplexer nach Anspruch 6, ausgelegt um ein einzelnes optisches Signal mit einer vorbestimmten Wellenlänge (λi) zu extrahieren und einzufügen, **dadurch gekennzeichnet, daß** jenes der N Bragg-Gitter, welches der vorbestimmten Wellenlänge (λi) zugeordnet ist, in seinem ersten Zustand gehalten wird, während jedes der N-1 weiteren Gitter in seinen zweiten Zustand versetzt ist.

8. Optischer Multiplexer nach Anspruch 6, ausgelegt um eine Mehrzahl p optischer Signale mit entsprechenden vorbestimmten Wellenlängen (λi, λi+1) zu extrahieren und einzufügen, **dadurch gekennzeichnet, daß** jene p der N Bragg-Gitter, welche den vorbestimmten Wellenlängen (λi, λi+1) zugeordnet sind, in ihrem ersten Zustand gehalten werden, während jedes der N-p weiteren Gitter in seinen zweiten Zustand versetzt wird.

9. Multiplexer nach Anspruch 1, **dadurch gekennzeichnet, daß** die wellenlängenselektiven Reflektionsmittel (MS) ausgelegt sind, andere Wellenlängen als die vorbestimmte Wellenlänge (λi) des mindestens einen zu extrahierenden Signals und des wenigstens einen einzufügenden Signals zu reflektieren, und die zu extrahierende und einzufügende vorbestimmte Wellenlänge (λi) zu transmittieren, wobei der Ausgang (p2) des ersten Zirkulators (C1) ausgelegt ist, die Signalgruppe zu liefern, aus welcher die vorbestimmte Wellenlänge (λi) zu extrahieren ist und in welche diese einzufügen ist, und der zweite Ausgang (p2) des zweiten Zirkulators (C2) ausgelegt ist, das Signal vorbestimmter Wellenlänge (λi) zu liefern, das aus dieser Signalgruppe extrahiert worden ist.

10. Optischer Multiplexer nach Anspruch 9, **dadurch gekennzeichnet, daß** die wellenlängenselektiven Reflektionsmittel (MS) mehrere optisch eingeschriebene Bragg-Gitter (R1...Ri-1,Ri+2...RN) umfassen, die entsprechend verschiedenen Wellenlängen der Gruppe der Wellenlängen zugeordnet sind, welche verschieden sind von der mindestens einen vorbestimmten Wellenlänge (λi), und sich in einem festgelegten Normalzustand befinden, in dem sie jeweils die eine entsprechende der verschiedenen Wellenlängen reflektieren.

11. Optischer Multiplexer nach Anspruch 10, ausgelegt um ein einzelnes optisches Signal mit vorbestimmter Wellenlänge (λi) zu extrahieren und einzufügen, **dadurch gekennzeichnet, daß** die wellenlängenselektiven Reflektionsmittel (MS) eine Anzahl optisch eingeschriebener Bragg-Gitter umfassen, die gleich N-1 ist.

12. Optischer Multiplexer nach Anspruch 10, ausgelegt um eine Mehrzahl p optischer Signale mit jeweils vorbestimmten Wellenlängen (λi, λi+1) zu extrahieren und einzufügen,
**dadurch gekennzeichnet, daß** die wellenlängenselektiven Reflektionsmittel (MS) eine Anzahl optisch eingeschriebener Bragg-Gitter umfasen, die gleich N-p ist.

13. Optischer Multiplexer nach Anspruch 9, **dadurch gekennzeichnet, daß**:
- die wellenlängenselektiven Reflektionsmittel (MS) eine Anzahl N in Reihe geschalteter, optisch eingeschriebener Bragg-Gitter (R1...Ri...RN) umfassen, die verschiedenen Wellenlängen der Gruppe der N Wellenlängen entsprechend zugeordnet sind, wobei jedes Gitter ausgelegt ist, sich entweder in einem ersten festgelegten Normalzustand zu befinden, in dem es diejenige Wellenlänge reflektiert, der es zugeordnet ist, oder in einem zweiten Zustand, in dem es diese entsprechende Wellenlänge transmittiert, und
- die wellenlängenselektiven Reflektionsmittel (MS) außerdem Steuerungsmittel (MS) umfassen, die dazu bestimmt sind, jedes er Gitter selektiv in den zweiten Zustand zu bringen.

14. Optischer Multiplexer nach Anspruch 13, ausgelegt um ein einzelnes optisches Signal mit vorbestimmter Wellenlänge (λi) zu extrahieren und einzufügen, **dadurch gekennzeichnet, daß** jenes der N Bragg-Gitter, welches der vorbestimmten Wellenlänge (λi) zugeordnet ist, in seinen zweiten Zustand versetzt ist, während jedes der N-1 weiteren Gitter in seinem ersten Zustand gehalten wird.

15. Optischer Multiplexer nach Anspruch 13, ausgelegt um eine Mehrzahl p optischer Signale mit jeweils vorbestimmten Wellenlängen (λi, λi+1) zu extrahieren und einzufügen, **dadurch gekennzeichnet, daß** jene p der N Bragg-Gitter, welche den vorbestimmten Wellenlängen (λi, λi+1) zugeordnet sind, in ihren ersten Zustand versetzt sind, während jedes der N-p weiteren Gitter in seinem ersten Zustand gehalten wird.

16. Multiplexer nach einem der Ansprüche 1 bis 15, **dadurch gekennzeichnet, daß** er außerdem mindestens ein optisches Verstärkungsmedium (AO) umfaßt, wobei dieses optische Verstärkungsmedium zwischen die optischen Selektionsmittel (MS) und entweder den ersten oder den zweiten Zirkulator (C1, C2) plaziert ist.

17. Multiplexer nach einem der Ansprüche 1 bis 15, **dadurch gekennzeichnet, daß** er außerdem mindestens ein optisches Verstärkungsmedium (AO) umfaßt, wobei dieses optische Verstärkungsmedium zwischen die optischen Selektionsmittel (MS) und den ersten Zirkulator (C1) plaziert ist.

18. Multiplexer nach einem der Ansprüche 1 bis 17, **dadurch gekennzeichnet, daß** er zwei optische Verstärkungsmedien (AO) umfaßt, die zwischen die optischen Selektionsmittel (MS) und den ersten bzw. den zweiten Zirkulator (C1, C2) plaziert sind.

19. Multiplexer nach einem der Ansprüche 1 bis 18, **dadurch gekennzeichnet, daß** sowohl der erste, als auch der zweite optische Zirkulator (C1, C2) einen ersten optischen Isolator und einen zweiten optischen Isolator umfassen, wobei der Eingang des ersten optischen Isolators und der Ausgang des zweiten optischen Isolators mit dem Eingang (p1) bzw. dem Ausgang (p2) des entsprechenden Zirkulators gekoppelt sind, während der Ausgang des ersten Isolators und der Eingang des zweiten Isolators mit den optischen Selektionsmitteln (MS) gekoppelt sind.

20. Optischer Multiplexer, der zumindest extrahierend wirkt, derart, daß er aus einer Gruppe von N optischen Signalen, deren entsprechende Wellenlängen zu einer Gruppe von N Wellenlängen (λ1...λi...λN) gehören, mindestens ein optisches Signal mit einer vorbestimmten Wellenlänge (λi) extrahieren kann, welche aus dieser Gruppe von N Wellenlängen gewählt ist, wobei der Multiplexer umfaßt:
- einen optischen Zirkulator (C4) der mindestens drei Öffnungen (p1, p2, p3, p4) umfaßt, die derart ausgelegt sind, daß die bei einer beliebigen dieser Öffnungen eingehenden Signale bei der unmittelbar folgenden Öffnung austreten, wobei die erste Öffnung (p1) einen Eingang bildet, der dazu bestimmt ist, die Gruppe von N Signalen aufzunehmen und die letzte Öffnung (p4) einen Ausgang bildet, sowie
- Wellenlängenselektive Reflektionsmittel (MS) die mit einer Seite an mindestens eine zwischenliegende Öffnung (p3) des Zirkulators gekoppelt sind und mindestens ein optisch eingeschriebenes Bragg-Gitter (R1...Ri-1,Ri+1...RN) umfassen, wobei die wellenlängenselektiven Reflektionsmittel ausgelegt sind, um entweder die Signalgruppe umfassend das Signal mit der vorbestimmten Wellenlänge (λi), oder die Signalgruppe umfassend die Signale mit einer von letzterer verschiedenen Wellenlänge zu reflektieren und die Signale der anderen Gruppe zu transmittieren, wobei die wellenlängenselektiven Reflektionsmittel (MS) mit dem obengenannten optischen Zirkulator (C4) zusammenwirken, um das optische Signal mit der bestimmten Wellenlänge (λi) zu extrahieren,
**dadurch gekennzeichnet, daß** der Multiplexer auch ausgelegt ist einfügend zu wirken, derart, daß er auch mindestens ein optisches Signal der vorbestimmten Wellenlänge (λi) in die Gruppe von optischen Signalen einfügen kann, von der man das Signal mit vorbestimmter Wellenlänge (λi) extrahiert hat, und dadurch, daß zu diesem Zweck:
- der optische Zirkulator (C4) ein Zirkulator mit vier Öffnungen ist, und
- die wellenlängenselektiven Reflektionsmittel (MS) an zwei zwischenliegende Öffnungen (p2, p3) des Zirkulators gekoppelt sind und entsprechend eine erste Gruppe von M in Reihe geschalteter, optisch eingeschriebener Bragg-Gitter (R1...Ri-1,Ri+1...RN) umfassen, die ausgelegt sind, jeweils eine entsprechende Wellenlänge zu reflektieren, die verschieden ist von der vorbestimmten Wellenlänge (λi), wobei die erste Gruppe mit einem Ende an die zweite Öffnung (p2) des Zirkulators gekoppelt ist, so daß ihr anderes Ende einen Ausgang bildet, der dazu ausgelegt ist, das extrahierte Signal mit bestimmter Wellenlänge (λi) zu liefern, und eine zur ersten Gruppe identische zweite Gruppe von M in Reihe geschalteter, optisch eingeschriebener Bragg-Gitter (R1...Ri-1,Ri+1...RN), die mit einem Ende an die dritte Öffnung (p3) des Zirkulators gekoppelt ist, wobei das anderes Ende der zweiten Gruppe einen Eingang bildet, der dazu bestimmt ist, das einzufügende Signal bestimmter Wellenlänge (λi) aufzunehmen, wobei der Ausgang (p4) des Zirkulators ausgelegt ist, die Signalgruppe zu liefern, aus welcher das Signal vorbestimmter Wellenlänge (λi) extrahiert und in welche es eingefügt worden ist.

21. Optischer Multiplexer nach Anspruch 20, **dadurch gekennzeichnet, daß** jedes der Bragg-Gitter der Selektionsmittel (MS) ausgelegt ist, um sich in einem festgelegten Normalzustand zu befinden, in dem es eine entsprechende Wellenlänge reflektiert, die verschieden ist von der zu extrahierenden und einzufügenden vorbestimmten Wellenlänge.

22. Optischer Multiplexer nach Anspruch 20, **dadurch gekennzeichnet, daß** jedes der Bragg-Gitter der Selektionsmittel (MS) ausgelegt ist, sich entweder in einem ersten festgelegten Normalzustand zu befinden, in dem es eine entsprechende Wellenlänge reflektiert, die verschieden ist von der zu extrahierenden und einzufügenden vorbestimmten Wellenlänge, oder in einem Zustand, in dem es die entsprechende Wellenlänge transmittiert, und dadurch, daß der Multiplexer außerdem Steuerungsmittel umfaßt, die dazu bestimmt sind, jedes der Gitter selektiv in seinen zweiten Zustand zu versetzen.

23. Optischer Multiplexer nach einem der Ansprüche 20 bis 22, ausgelegt um ein einzelnes optisches Signal mit vorbestimmter Wellenlänge (λi) zu extrahieren und einzufügen, **dadurch gekennzeichnet, daß** M=N-1.

24. Optischer Multiplexer nach einem der Ansprüche 20 bis 22, ausgelegt um eine Mehrzahl p optischer Signale mit jeweils vorbestimmten Wellenlängen (λi, λii+1) zu extrahieren und einzufügen, **dadurch gekennzeichnet, daß** M=N-p.

25. Multiplexer nach einem der Ansprüche 20 bis 24, **dadurch gekennzeichnet, daß** er außerdem mindestens ein optisches Verstärkungsmedium (AO) umfaßt, das mit mindestens einem der ersten und zweiten Gruppen in Reihe geschaltet ist.

26. Multiplexer nach Anspruch 25, **dadurch gekennzeichnet, daß** sowohl die erste als auch die zweite Gruppe mit mindestens einem optischen Verstärkungsmedium (AO) in Reihe geschaltet ist.

## Claims

1. An optical multiplexer having a drop function so that it is able to drop, from a set of N optical signals whose respective wavelengths belong to a set of N wavelengths (λ₁, ..., λᵢ, ... λ_{N}), an optical signal having a predetermined wavelength (λᵢ) selected from said set of N wavelengths, said multiplexer comprising:
- at least one optical circulator (C1) having three ports (p1, p3, p2) and adapted so that signals incoming at any of its ports exit via the immediately following port, its first port (p1) constituting an input adapted to receive said set of N signals and its third port (p2) constituting an output, and
- wavelength-selective reflector means (MS) coupled via one end to the second port (p3) of the circulator, comprising at least one photo-induced Bragg grating (Ri; Ri, Ri+1; R1, ..., Ri-1, Ri+2, ..., R_{N}, R1, .... Ri, ..., R_{N}), said wavelength-selective reflector means being adapted to reflect signals from one of two groups of signals, of which a first group comprises the signal having said predetermined wavelength (λᵢ) and the second group comprises the signals having a different wavelength, and being adapted to pass the signals of the other of the two groups, and said wavelength-selective reflector means (MS) co-operating with said optical circulator (C1) to drop said optical signal having said predetermined wavelength (λᵢ),
which multiplexer is **characterized in that** it also has an add function so that it is also able to add at least one optical signal at a predetermined wavelength (λᵢ) to said set of optical signals from which said signal at a predetermined wavelength (λᵢ) is dropped,
the multiplexer further comprising for this purpose a second optical circulator (C2) having three ports (p1, p3, p2), adapted so that signals incoming at any of its ports exit via the immediately following port, said second optical circulator being coupled by its second port (p3) to the other end of said wavelength-selective reflector means (MS), its first port (p1) constituting an input adapted to receive said signal at said predetermined wavelength (λᵢ) to be added to the set of signals and its third port (p2) constituting an output,
said wavelength-selective reflector means (MS) being adapted for co-operating with the two circulators (C1, C2) so that the outputs (p2) of said two circulators respectively supply said signal (λᵢ) dropped from said set of signals and said set of signals which said signal at said predetermined wavelength (λᵢ) is dropped from and added to.

2. A multiplexer according to claim 1, **characterized in that** said wavelength-selective reflector means (MS) are adapted to reflect said predetermined wavelength (λᵢ) of said at least one signal to be dropped and of said at least one signal to be added and to pass the other signals having different wavelengths, the output (p2) of the first circulator (C1) is adapted to supply said signal at said predetermined wavelength (λᵢ) dropped from said set of signals, and the output (p2) of the second circulator (C2) is adapted to supply the set of signals which said signal at said predetermined wavelength (λᵢ) is dropped from and added to.

3. An optical multiplexer according to claim 2, **characterized in that** said at least one photo-induced Bragg grating (Ri; Ri, Ri + 1) constituting said wavelength-selective reflector means (MS) is in a natural state in which it reflects said predetermined wavelength (λᵢ).

4. An optical multiplexer according to claim 3, adapted to drop and to add a single optical signal at a predetermined wavelength (λᵢ), **characterized in that** said wavelength-selective reflector means (MS) comprise a single photo-induced Bragg grating (Ri) which is in said natural state in which it reflects said predetermined wavelength (λᵢ).

5. An optical multiplexer according to claim 3, adapted to drop and to add a plurality p of optical signals having respective predetermined wavelengths (λᵢ, λᵢ₊₁), **characterized in that** said wavelength-selective reflector means (MS) comprise a corresponding number p of photo-induced Bragg gratings (Ri, Ri+1) in series and all in said natural state in which each reflects one of said predetermined wavelengths (λᵢ, λᵢ₊₁).

6. An optical multiplexer according to claim 2, **characterized in that**:
- said wavelength-selective reflector means (MS) comprise N photo-induced Bragg gratings (R1, ..., Ri, ..., R_{N}) in series and respectively associated with the wavelengths of said set of N wavelengths and each of said gratings is adapted to be either in a natural state in which it reflects the respective wavelength with which it is associated or a second state in which it passes said respective wavelength, and
- said selective reflector means (MS) further comprise control means (MC) adapted to switch each of said gratings selectively to said second state.

7. An optical multiplexer according to claim 6, adapted to drop and to add a single optical signal having a predetermined wavelength (λᵢ), **characterized in that** said Bragg grating associated with said predetermined wavelength (λᵢ) is maintained in its first state and each of the other (N-1) gratings is placed in its second state.

8. An optical multiplexer according to claim 6, adapted to drop and to add a plurality p of optical signals at respective predetermined wavelengths (λᵢ, λᵢ₊₁), **characterized in that** the p Bragg gratings associated with said predetermined wavelengths (λᵢ, λᵢ₊₁) are maintained in their first state and each of the (N-p) other gratings is placed in its second state.

9. A multiplexer according to claim 1, **characterized in that** said wavelength-selective reflector means (MS) are adapted to reflect wavelengths other than said predetermined wavelength (λᵢ) of said at least one signal to be dropped and of said at least one signal to be added and to pass said predetermined wavelength (λᵢ) to be dropped and to be added, the output (p2) of the first circulator (C1) is adapted to supply all of the signals which said signal of predetermined wavelength (λᵢ) has been dropped from and added to, and the output (p2) of the second circulator (C2) is adapted to supply said signal at said predetermined wavelength (λᵢ) dropped from said set of signals.

10. An optical multiplexer according to claim 9, **characterized in that** said wavelength-selective reflector means (MS) comprise a plurality of photo-induced Bragg gratings (R1, ..., Ri-1, Ri+2, ..., R_{N}) that are associated with respective different wavelengths of the set of wavelengths other than said at least one predetermined wavelength (λᵢ) and are all in a natural state in which they reflect a respective one of said other wavelengths.

11. An optical multiplexer according to claim 10, adapted to drop and to add a single optical signal at a predetermined wavelength (λᵢ), **characterized in that** said wavelength-selective reflector means (MS) comprise N-1 photo-induced Bragg gratings.

12. An optical multiplexer according to claim 10, adapted to drop and to add a plurality p of optical signals at predetermined wavelengths (λᵢ, λᵢ₊₁), **characterized in that** said wavelength-selective reflector means (MS) comprise N-p photo-induced Bragg gratings.

13. An optical multiplexer according to claim 9, **characterized in that**:
- said wavelength-selective reflector means (MS) comprise N photo-induced Bragg gratings (R1, ..., Ri, R_{N}) in series and associated with respective different wavelengths of said set of N wavelengths and each of said gratings is adapted to be either in a natural state in which it reflects the respective wavelength with which it is associated or in a second state in which it passes said respective wavelength, and
- said selective reflection means (MS) further comprise control means (MC) adapted to switch each of said gratings selectively to said second state.

14. An optical multiplexer according to claim 13, adapted to drop and to add a single optical signal at a predetermined wavelength (λᵢ), **characterized in that** whichever of said N Bragg gratings is associated with said predetermined wavelength (λᵢ) is placed in its second state and each of the other N-1 gratings is maintained in its first state.

15. An optical multiplexer according to claim 13, adapted to drop and to add a plurality p of optical signals at predetermined wavelengths (λᵢ, λᵢ₊₁), **characterized in that** said (p) Bragg gratings that are associated with said predetermined wavelengths (λᵢ, λᵢ₊₁) are placed in their second state and each of the N-p other gratings is maintained in its first state.

16. A multiplexer according to any one of claims 1 to 15, **characterized in that** it further comprises at least one optical amplifier medium (AO), said optical amplifier medium being placed between the optical selector means (MS) and either the first or the second circulator (C1, C2).

17. A multiplexer according to any one of claims 1 to 15, **characterized in that** it further comprises at least one optical amplifier medium (AO), said optical amplifier medium being placed between the optical selector means (MS) and the first circulator (C1).

18. A multiplexer according to any one of claims 1 to 17, **characterized in that** it comprises two optical amplifier media between the optical selector means (MS) and the first and second circulators (C1, C2), respectively.

19. A multiplexer according to any one of claims 1 to 18, **characterized in that** each of the first and second optical circulators (C1, C2) comprises a first optical isolator and a second optical isolator, the input of the first isolator and the output of the second isolator are respectively coupled to the input (p1) and to the output (p2) of the corresponding circulator, and the output of the first isolator and the input of the second isolator are coupled to the optical selector means (MS).

20. An optical multiplexer having a drop function so that it is able to drop, from a set of N optical signals whose respective wavelengths belong to a set of N wavelengths (λ₁, ..., λᵢ, ... λ_{N}), an optical signal having a predetermined wavelength (λᵢ) selected from said set of N wavelengths, said multiplexer comprising:
- an optical circulator (C4) having at least three ports (p1, p2, p3, p4) and adapted so that signals incoming at any of its ports exit via the immediately following port, its first port (p1) constituting an input adapted to receive said set of N signals and its last port (p4) constituting an output, and
- wavelength-selective reflector means (MS) coupled via a first end to at least one intermediate port (p3) of the circulator, comprising at least one photo-induced Bragg grating (R1, ..., Ri-1, Ri+1 ..., R_{N}), said wavelength-selective reflector means being adapted to reflect one of two groups of signals respectively comprising the signal having said predetermined wavelength (λᵢ) and the signals having a different wavelength and to pass signals of the other group, said wavelength-selective reflector means (MS) co-operating with said optical circulator (C4) to drop said optical signal having said predetermined wavelength (λᵢ),
which multiplexer is **characterized in that** it also has an add function so that it is able to add at least one optical signal having a predetermined wavelength (λᵢ) to said set of optical signals from which said signal at said predetermined wavelength (λᵢ) is dropped,
and **in that**, to this end:
- the optical circulator (C4) is a four-port circulator, and
- the wavelength-selective reflector means (MS) are coupled to two intermediate ports (p2, p3) of the circulator and respectively comprise a first set of M photo-induced Bragg gratings (R1, .... Ri-1, Ri+1 ..., RN) that are in series and each adapted to reflect a respective wavelength different from said predetermined wavelength (λᵢ), with said first set of gratings coupled at one end to the second port (p2) of the circulator so that its other end constitutes an output adapted to supply said dropped signal having a predetermined wavelength (λᵢ), and a second set of (M) photo-induced Bragg gratings identical to the first set and coupled at one end to the third port (p3) of the circulator, the other end of the second set constituting an input into which is injected the signal having a predetermined wavelength (λᵢ) to be added, with the output (p4) of the circulator adapted to supply said set of signals which the signal at the predetermined wavelength (λᵢ) is dropped from and added to.

21. An optical multiplexer according to claim 20, **characterized in that** each Bragg grating of said selector means (MS) is adapted to be in a natural state in which it reflects a respective wavelength different from said predetermined wavelength to be dropped and to be added.

22. An optical multiplexer according to claim 20, **characterized in that** each Bragg grating of said selector means (MS) is adapted to be either in a natural state in which it reflects a respective wavelength different from said predetermined wavelength to be dropped and to be added or in a second state in which it passes said respective wavelength and **in that** the multiplexer further comprises control means adapted to switch each of said gratings selectively to said second state.

23. An optical multiplexer according to any one of claims 20 to 22 adapted to drop and to add a single optical signal at a predetermined wavelength (λᵢ) and **characterized in that** M = N - 1.

24. An optical multiplexer according to any one of claims 20 to 22, adapted to drop and to add a plurality p of optical signals having respective predetermined wavelengths (λᵢ, λᵢ₊₁), **characterized in that** M = N-p.

25. An multiplexer according to any one of claims 20 to 24, **characterized in that** it further comprises at least one optical amplifier medium (AO) in series with the first and/or second set(s).

26. A multiplexer according to claim 25, **characterized in that** each of the first and second sets is in series with at least one optical amplifier medium (AO).
